# EUROPÄISCHE PATENTSCHRIFT

(11) **EP 0 992 381 B1**
(45) Veröffentlichungstag und Bekanntmachung des Hinweises auf die Patenterteilung: **13.12.2006**
(21) Anmeldenummer: 99118669.3
(22) Anmeldetag: 22.09.1999
(51) Int. Cl.: B60J 1/18

(54) **Heckscheibe und deren Befestigung am Verdeckbezug eines Cabriolet-Fahrzeugs**
Rear window and its mounting to the cover for a convertible vehicle
Fenêtre arrière et sa fixation à la capote d'une voiture cabriolet

(30) Priorität: 08.10.1998 DE 29817980 U
(43) Veröffentlichungstag der Anmeldung: 12.04.2000
(73) Patentinhaber: Wilhelm Karmann GmbH, 49084 Osnabrück (DE)
(72) Erfinder: Hüdepohl, Stefan, 49143 Bissendorf (DE); Bücker, Ralf, 49170 Hagen (DE)
(74) Vertreter: Busse & Busse Patentanwälte

(56) Entgegenhaltungen:
- EP-A- 0 520 353
- DE-A- 4 341 079
- DE-B- 1 604 520
- US-A- 3 649 443
- US-A- 5 600 922

## Beschreibung

Die Erfindung betrifft eine Heckscheibe aus Festglas und deren Befestigung am Verdeckbezug eines Cabriolet-Fahrzeuges in einer Ausbildung nach dem Oberbegriff des Patentanspruches 1.

Bei einer bekannten Heckfensterscheibe für Cabriolet-Fahrzeuge (DE 93 06 462 U) sind zu deren Befestigung am Randbereich des Verdeckstoffes mehrere Montagephasen vorgesehen, wobei über eine Hochfrequenz-Schweißung zuerst ein Kunststoffverbindungselement am Verdeckstoff festgelegt und dieses danach über eine Klebstoffschicht mit dem Randbereich der Festglasscheibe verbunden wird.

Aus der DE-A 1604520 ist eine Heckscheibe aus Festglas für ein Cabriolet-Fahrzeug der eingangs genannten Art bekannt, bei der zur Verbindung des Verdeckstoffes und der Festglasscheibe der Kantenbereich des Fensters nach einer Behandlung mit einem haftfähigen Grundierungsmittel mit einer Vinylschicht überzogen wird, wobei die das Glasfenster übergreifende Fläche des Dachtuches ebenfalls mit einem zum Vinylüberzug der Glaskanten passenden Vinyl überzogen ist. Die so vorbereitete Dachtuchfläche und die Glaskanten werden dann mittels einer dielektrischen Erwärmung miteinander verbunden.

Nachteilig hierbei ist, daß die Vinylschicht sowohl auf der Glasscheibe als auch auf dem Verdeckstoff vorzusehen ist, so daß an die paßgenaue Anordnung dieser beiden Schichten erhöhte Fertigungs- und Montageanforderungen zu stellen sind.

Der Erfindung liegt die Aufgabe zugrunde, für eine Heckscheibe aus Festglas eine verbesserte Befestigung am Verdeckbezug eines Cabriolet-Fahrzeuges mit einer geringen Anzahl von Verbindungsteilen und einer einfachen automatisierbaren Montagefolge zu schaffen, wobei hohe Dichtigkeitsanforderungen erfüllt sein sollen und eine optisch ansprechende Verbindung zu realisieren ist.

Die Erfindung löst diese Aufgabe mit einer Heckscheibe aus Festglas in einer Ausgestaltung nach dem Patentanspruch 1. Hinsichtlich wesentlicher weiterer Ausgestaltungen der Erfindung wird auf die Ansprüche 2 bis 12 verwiesen.

Erfindungsgemäß wird die aus Festglas bestehende und als Montagebaugruppe vorbereitete Heckscheibe direkt in den am Aussparungsrand eine Überdeckungszone bildenden Verdeckbezug integriert, so daß die Montageteile im Bereich des Aussparungsrandes einen Übergangsbereich mit geringem Randspalt und ohne zusätzlich zu montierende, in der Einbaulage sichtbare Verbindungsteile bilden. Damit sind am Verdeckstoff vor der Montage der Heckscheibe anzubringende Verbindungselemente entbehrlich und im heckseitigen Bereich des Verdeckaufbaus ist eine optisch ansprechende Ausführung der Heckscheiben-Einbindung geschaffen, die im Sinne einer direkten Verdeckstoff-Festglas-Anbindung aufgebaut ist und sich als stabil herausgestellt hat.

Dieser Verbindungseingriff von Verdeckstoff-Rand und Heckscheibe ist mit geringem Aufwand mit wenigen Verfahrensschritten so zu optimieren, daß eine prozeßsichere automatische Montage unterschiedlich konturierter Heckscheiben möglich ist, die randseitigen Überdeckungszonen auch in relativ schmaler Ausbildung hinreichend verbindungsstabil sind und damit die Durchsicht im Heckbereich des Fahrzeugs vorteilhaft verbessert werden kann.

Hinsichtlich weiterer Einzelheiten und Vorteile der Erfindung wird auf die nachfolgende Beschreibung und die Zeichnung verwiesen, in der die erfindungsgemäße Befestigung der Heckscheibe anhand mehrerer Ausführungsbeispiele näher erläutert ist. In der Zeichnung zeigen:
- Fig. 1: eine perspektivische Heckansicht auf ein Cabriolet-Fahrzeug mit einem eine Heckscheibe aufweisenden Faltverdeck in Schließstellung,
- Fig. 2: eine vergrößerte Einzeldarstellung einer als einbaufertiges Zulieferteil bereitgestellten Heckscheibe,
- Fig. 3: ein vergrößerter Ausschnitt der Heckscheibe mit Explosivdarstellung des Verbindungsbereichs mit dem Verdeckbezug gemäß einer Linie III-III in Fig. 1,
- Fig. 4: eine Explosivdarstellung ähnlich Fig. 3 mit einem Verbindungsaufbau in einer zweiten Ausführungsform,
- Fig. 5: eine Explosivdarstellung des Verbindungsbereiches gemäß Fig. 3 in einem in Fig. 2 mit einer Linie V-V gekennzeichneten Bereich,
- Fig. 6: eine Ausschnittsdarstellung ähnlich Fig. 3 mit dem Verbindungsaufbau zwischen Festglas und Verdeckbezug nach einem HF-Schweißvorgang, und
- Fig. 7: eine Ausschnittsdarstellung ähnlich Fig. 5 mit dem Verbindungsaufbau nach dem HF-Schweißvorgang.

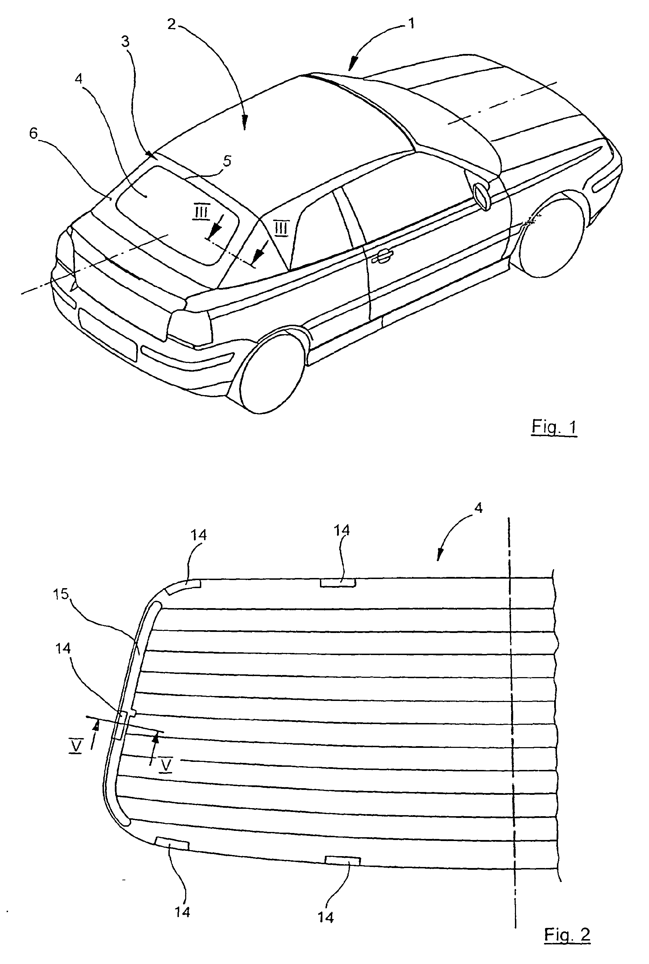

In Fig. 1 ist ein Cabriolet-Fahrzeug 1 dargestellt, dessen Verdeck 2 in einem heckseitigen Bereich 3 eine aus Festglas bestehende Heckscheibe 4 aufweist, die bei bekannten Be-festigungen randseitig bei 5 mittels eines nicht näher dargestellten Kunststoff-Elementes mit dem Verdeckbezug 6 über eine Hochfrequenz-Schweißung verbunden ist.

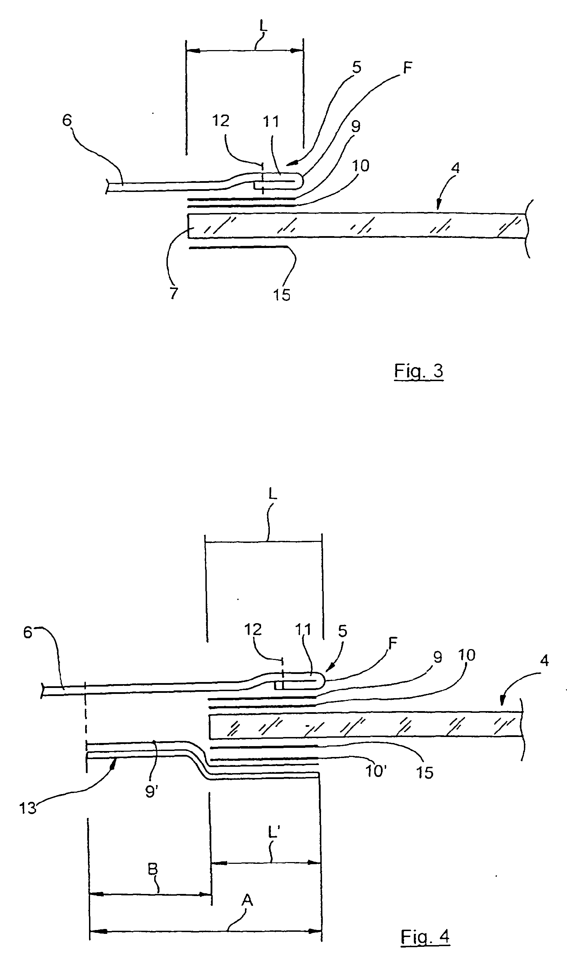

Bei der erfindungsgemäßen Befestigung der Heckscheibe 4 sind ein Scheibenrand 7 und der Randbereich 5 des aus einer ein- oder mehrlagigen Gewebebahn bestehenden Verdeckbezugs 6 in einer Überdeckungszone L (Fig. 3) direkt miteinander verschweißt. Als Verbindungselement ist dabei eine Schweißfolie 9 vorgesehen, die eine umlaufende Zwischenlage bildet.

Die Ausschnittsdarstellung gemäß Fig. 3 zeigt in einer Explosivdarstellung eine erste Ausführung des Befestigungsaufbaus in der Überdeckungszone L, wobei oberhalb des Scheibenrandes 7 eine Primerschicht 10 aufgetragen und über diese die Schweißfolie 9 angeordnet ist. Vor dem Schweißvorgang wird der Verdeckbezug 6 zur Schweißfolie 9 hin mit einem HF-Schweißkleber (nicht dargestellt) bestrichen.

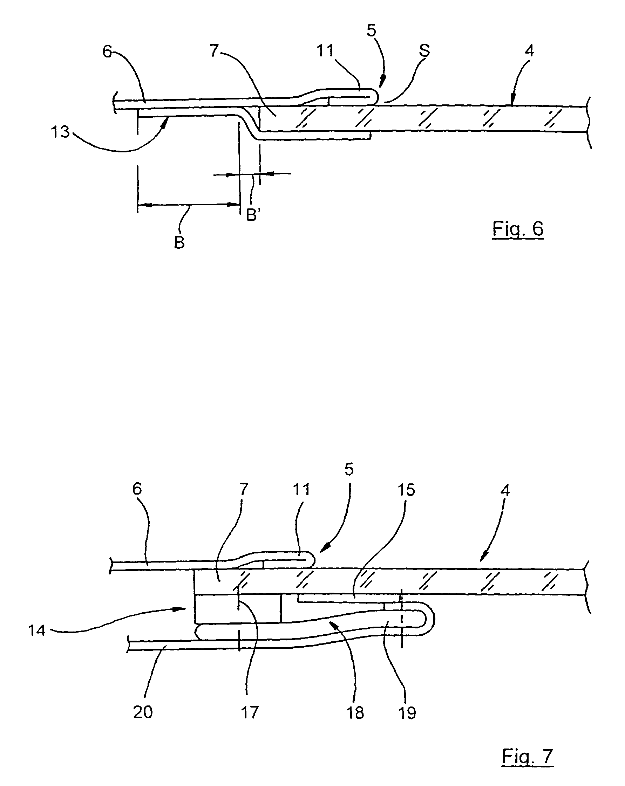

Der Randbereich 5 als Begrenzung der Scheibenöffnung im Verdeckbezug 6 ist mit einer zum Scheibenrand 7 hin umgelegten und zumindest teilweise auf der Schweißfolie 9 aufliegenden Randfalte 11 versehen, die mittels einer Naht 12 oder dgl. Verbindungsteil fixiert ist. Dabei ist im Bereich der Randfalte 11 ein gleichmäßiger Faltradius F geformt, der eine optisch ansprechende Kontur mit geringem Randspalt S (Fig. 6) bewirkt.

In einer zweiten Ausführungsform der Scheibenbefestigung gemäß Fig. 4 ist auf der zur oberen Überdeckungszone L abgewandten Unterseite der Festglasscheibe 4 eine sich streifenförmig in Umfangsrichtung der Scheibe erstreckende Abdeckung 13 vorgesehen, die ebenfalls über eine Schweißverbindung in der Zone L' an der zum Fahrzeuginnenraum gerichteten Unterseite der Scheibe 4 festgelegt ist und andererseits ist die Abdeckung 13 in einer Breite B mit dem Verdeckbezug 6 verbunden. Zum Scheibenrand 7 hin bildet die Abdeckung 13 einen Bogen B' (Fig. 6) von 2 bis 6 mm, vorzugsweise 4 mm, so daß in diesem Verbindungsbereich eine Überbelastung durch Knickung vermieden ist.

Die im Bereich des insbesondere textilen Abdeckstreifens 13 vorgesehene Schweißverbindung ist ebenfalls mehrlagig aufgebaut, wobei eine Schweißfolie 9', eine Primerschicht 10' und ein HF-Schweißkleber (nicht dargestellt) zwischen der Folie 9' und dem Streifen 13 vorgesehen sind. Die Schweißfolie 9' überragt den Rand 7 der Festglasscheibe 4 und verläuft in einer Breite B bis unterhalb des Verdeckbezuges 6. In diesem überragenden Bereich B sind die Schweißfolie 9' und der Abdeckstreifen 13 mit dem Verdeckbezug 6 verbunden (Fig. 6), wobei der nicht dargestellte HF-Schweißkleber auch im Bereich B unterseitig am Verdeckbezug 6 vorgesehen ist.

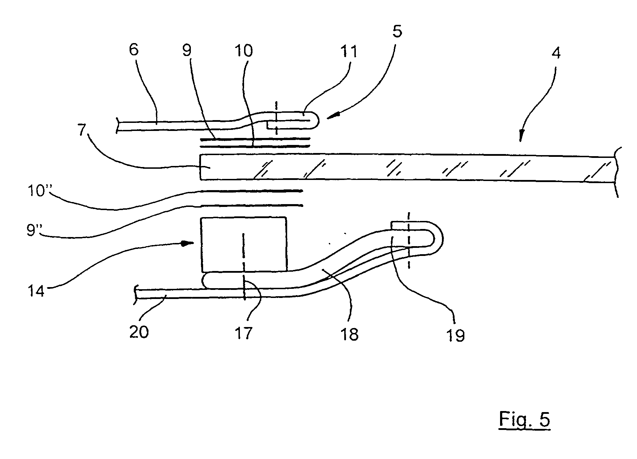

Die Ausbildung der Heckscheibenbefestigung gemäß Fig. 5 und 7 zeigt die Schweißverbindung im Bereich eines zusätzlichen Halteteils 14, von dem mehrere auf der zum Innenraum des Fahrzeugs 1 gerichteten Seite des Scheibenrandes 7 vorgesehen sind (Fig. 2). In der Gesamtansicht der vorgefertigten Heckscheibe 4 aus Festglas wird auch deren Ausbildung mit jeweiligen an der Innenseite der Scheibe verlaufenden Heizleitungen 15 deutlich, die im Bereich der Überdeckungszone L' (Fig. 4) ohne Beeinflussung der Festigkeit und der Dichtigkeit in den Aufbau der Schweißverbindung integriert sind.

In zweckmäßiger Ausführung kann der mehrlagig ausgebildete Verdeckbezug 6 in seiner Überdeckungszone L zur Festglasscheibe 4 hin auch eine oder mehrere Polyester-Lagen als Gewebebahn aufweisen, in deren Bereich beim HF-Schweißvorgang mittels der Schweißfolie 9 eine stoffschlüssige Verbindung hergestellt wird.

Mit den Explosivdarstellungen gemäß Fig. 3 bis 5 sind jeweilige Montagephasen bei der Integration der Heckscheibe 4 in den Verdeckbezug 6 verdeutlicht. Der Scheibenrand 7 wird oberseitig in einer Vorbehandlungsphase mit einem Reinigungsmittel bestrichen und dabei gesäubert und entfettet. Dieses Reinigungsmittel wirkt gleichzeitig als Aktivator der Festglasscheibe. Danach wird auf dem Randbereich 7 der Primer 10 als haftvermittelnde Grundierung aufgetragen und nach einer Belüftungszeit, beispielsweise 20 Minuten, die Schweißfolie 9 aufgelegt. Der Primer 10 und die Folie 9 bilden dabei die Überdeckungszone L, die eine Breite von 10 bis 20 mm, vorzugsweise 15 mm, aufweist. Der Verdeckbezug 6 wird unterseitig mit einer Klebeschicht versehen, die nach einer Ablüftungsphase (z. B. 30 min.) auf die Schweißfolie 9 im Bereich der Überdekkungszone L aufgelegt wird. Danach wird diese mehrlagig vorbereitete Zone L über eine HF-Schweißung stoffschlüssig mit der Heckscheibe 4 verbunden.

In den dargestellten Ausführungsformen wird der Verdeckbezug 6 vor der Verschweißung mit der Heckscheibe 4 randseitig nach innen zur Festglasscheibe 4 hin zu einer Falte 11 gelegt. Diese Falte 11 wird in ihrem doppellagigen Bereich, der ca. 4 mm breit ist, vernäht und danach auf diesen Randbereich des Verdeckbezuges 6 die unterseitige Klebschicht aufgebracht. Nach dem Auftragen der Primerschicht 10 und dem Einlegen der Schweißfolie 9 wird die Hochfrequenz-Schweißung durchgeführt, so daß die oberseitige Verbindung von Scheibe 4 und Verdeckbezug 6 ähnlich Fig. 6 erreicht ist. In vorteilhafter Verfahrensführung kann nach dem Legen der Falte 11 bei der anschließenden Vernähung gleichzeitig die Schweißfolie 9 mit dem Verdeckbezug 6 verbunden werden.

Bei einer zusätzlichen Befestigung der in Fig. 4 und Fig. 6 dargestellten Abdeckung 13 an der Unterseite der Heckscheibe 4 wird auf diese und das Heizfeld 15 die Primerschicht 10' aufgetragen und auf diese die Schweißfolie 9', beispielsweise mit einer Breite A von 30 mm (entsprechend der Breite des Abdeckstreifens 13) aufgelegt. Der Abdeckstreifen 13 ist mit einem HF-Schweißkleber bestrichen und auf diesen wird die insbesondere einseitig selbstklebende Schweißfolie 9' aufgelegt. In zweckmäßiger Ausführung ist der mit dem Verdeckbezug 6 materialgleiche Abdeckstreifen 13 auf seiner gesamten Breite A (ca. 30 mm) mit HF-Schweißkleber bestrichen und auf dieser bestrichenen Oberfläche des Abdeckstreifens 13 wird die selbstklebende Schweißfolie 9' lagegenau festgelegt.

Mit diesem zusätzlichen Abdeckstreifen 13 ist eine stabile Festlegung der Heckscheibe 4 zum Verdeckbezug 6 hin erreicht, derart, daß bei Bewegungen des Verdeckbezuges wirksame Zugkräfte über das Abdeckteil 13 gleichmäßig in die mehrlagige Verdeckkonstruktion eingeleitet werden können, damit Überbelastungen der außenliegenden Schweißverbindung vermieden werden und deren optisch anssprechende Kontur über eine lange Nutzungsdauer erhalten bleibt.

Die vorbeschriebenen, mehrlagig vorbereiteten Überdekkungs-zonen L und L' bzw. A werden in zweckmäßiger Verfahrensführung gleichzeitig in einem HF-Schweißvorgang verbunden, dessen Verfahrensparameter betreffend die Generatorleistung, Schweißzeit, Nachschweißzeit und Preßdruck optimal auf die direkte Anbindung des Verdeckbezugs 6 an die Festglasscheibe 4 einstellbar sind.

Die Zusammenschau von Fig. 5 und 7 zeigt die Festlegung eines zusätzlichen Halteteils 14 im Bereich der unterseitigen Überdeckungszone L'. Dieses Halteteil 14 wird in einer ersten Montagephase unterseitig an der Heckscheibe 4 befestigt, nach dem diese im Randbereich 7 entsprechend gesäubert, mit einer Primerschicht 10'' versehen, die Schweißfolie 9' aufgelegt und danach die HF-Schweißung am Halteteil 14 vorgenommen wird. Ebenso ist denkbar, daß das Halteteil 14 an die Festglasscheibe 4 angespritzt wird.

An diesem Halteteil 14 kann in einer Verbindungsebene 17 eine aus Kunststoff o. dgl. bestehende Blende 18 festgelegt werden, an deren freien Ende 19 ein innerer Verdeckhimmel 20 festlegbar ist. Damit ist eine vollständige Abdeckung des Randbereichs der Heckscheibe 4 erreicht und über eine lösbare Festlegung des Verdeckhimmels 20 an der Blende 18 eine einfache Montage und Demontage möglich.

## Patentansprüche

1. Heckscheibe aus Festglas für ein Cabriolet-Fahrzeug, die randseitig über ein Kunststoffverbindungselement mit dem Verdeckbezug über eine Hochfrequenz-Schweißung verbunden ist, wobei der Scheibenrand und der Randbereich des Verdeckbezuges in einer Überdeckungszone miteinander verschweißt sind und als Verbindungselement eine Schweißfolie vorgesehen ist, die eine umlaufende Zwischenlage bildet, **dadurch gekennzeichnet, daß** der Verdeckbezug (6) mit einer randseitigen Falte (11) versehen und die Falte (11) des Verdeckbezuges mit der Schweißfolie vernäht ist.

2. Heckscheibe nach Anspruch 1 **dadurch gekennzeichnet, daß** zwischen dem Scheibenrand (7) und der Schweißfolie (9) eine Primerschicht (10) aufgetragen ist.

3. Heckscheibe nach Anspruch 1 oder 2, **dadurch gekennzeichnet, daß** der Randbereich (5) des Verdeckbezugs (6) mit einer auf der Schweißfolie (9) aufliegenden Klebeschicht bestrichen ist.

4. Heckscheibe nach einem der Ansprüche 1 bis 3, **dadurch gekennzeichnet, daß** der Randbereich (5) des Verdeckbezuges (6) mit einer zum Scheibenrand (7) hin umgelegten und zumindest teilweise auf der Schweißfolie (9) aufliegenden RandFalte (11) versehen ist.

5. Heckscheibe nach einem der Ansprüche 1 bis 4, **dadurch gekennzeichnet, daß** auf der zur oberen Überdeckungszone (L) abgewandten Unterseite der Festglasscheibe (4) eine streifenförmige Abdeckung (13) über eine Schweißverbindung (L') festgelegt ist und die Abdeckung (13) anderenends mit dem Verdeckbezug (6) verbunden ist.

6. Heckscheibe nach Anspruch 5, **dadurch gekennzeichnet, daß** die im Bereich des Abdeckstreifens (13) vorgesehene Schweißverbindung (L') ebenfalls eine Schweißfolie (9') aufweist, diese den Rand (7) der Festglasscheibe (4) überragt, bis unterhalb des Verdeckbezuges (6) verläuft und der Abdeckstreifen (13) mit dem Verdeckbezug (6) mittels des überragenden Bereichs der Schweißfolie (9') verbunden ist.

7. Heckscheibe nach einem der Ansprüche 1 bis 6, **dadurch gekennzeichnet, daß** im Bereich des Scheibenrandes (7) zumindest ein Innenraumteile (20) des Fahrzeugs (1) aufnehmendes Halteteil (14) vorgesehen ist.

8. Heckscheibe nach einem der Ansprüche 1 bis 7, **dadurch gekennzeichnet, daß** im Bereich des Scheibenrandes (7) eine Heizleitung (15) in die obere und/oder untere Überdeckungszone (L; L') integriert ist.

9. Heckscheibe nach einem der Ansprüche 1 bis 8, **dadurch gekennzeichnet, daß** der mehrlagig ausgebildete Verdeckbezug (6) zumindest in der Überdeckungszone (L) mit der Festglasscheibe (4) eine oder mehrere Polyester-Lage(n) aufweist.

10. Heckscheibe aus Festglas für ein Cabriolet-Fahrzeug, nach einem oder mehreren der Ansprüche 1 bis 9, wobei die Glasscheibe (4) mit dem Verdeckbezug (6) durch folgende Schritte verbunden ist: die Festglasscheibe (4) wird in einer randseitig den Verdeckbezug (6) untergreifenden Überdeckungszone (L) mit einer Primerschicht (10) versehen, zwischen dieser und dem unterseitig eine Klebeschicht aufweisenden Verdeckbezug (6) wird eine Schweißfolie (9) eingebracht und danach wird in einem Hochfrequenz-Schweißvor-gang die Festglasscheibe (4) direkt in den Verdeckbezug (6) eingebunden.

11. Heckscheibe nach Anspruch 10, die mit dem Verdeckbezug (6) durch folgende Schritte verbunden ist: der Verdeckbezug (6) wird randseitig nach innen zur Festglasscheibe (4) hin zu einer Falte (11) gelegt, diese Falte (11) wird in ihrem doppellagigen Bereich vernäht, unterseitig eine Klebeschicht aufgebracht, nach dem Auftragen und Abtrocknen der Klebeschicht wird die Schweißfolie (9) zwischen Festglasscheibe (4) und Falte (11) eingelegt und anschließend die Hochfrequenz-Schweißung durchgeführt.

12. Heckscheibe nach Anspruch 11, **dadurch gekennzeichnet, daß** nach dem Vernähen der Falte mit der Schweißfolie eine Klebeschicht aufgetragen wird.

## Claims

1. Rear window of solid glass for a convertible vehicle, which rear window is connected at the edges, via a connecting member of plastics material, to the covering of the folding top by means of a high-frequency weld, the edge of the window and the edge region of the covering of the folding top being welded together in a zone of overlap and a weldable film, which forms an intermediate layer extending round in a loop, is provided as the connecting element, **characterised in that** the covering (6) of the folding top is provided with a fold (11) at the edges and the fold (11) in the covering of the folding top is sewn to the weldable film.

2. Rear window according to claim 1, **characterised in that** a layer of primer (10) is applied between the edge (7) of the window and the weldable film (9).

3. Rear window according to claim 1 or 2, **characterised in that** the edge region (5) of the covering (6) of the folding top is coated with an adhesive layer which rests on the weldable film (9).

4. Rear window according to one of claims 1 to 3, **characterised in that** the edge region (5) of the covering (6) of the folding top is provided with an edge fold (11) which is folded over towards the edge (7) of the window and at least part of which rests on the weldable film (9).

5. Rear window according to one of claims 1 to 4, **characterised in that** a masking member (13) in strip form is fixed in place on the underside, remote from the upper zone of overlap (L), of the window (4) of solid glass via a welded joint (L') and at the other end the masking member (13) is connected to the covering (6) of the folding top.

6. Rear window according to claim 5, **characterised in that** the welded joint (L') provided in the region of the masking strip (13) likewise has a weldable film (9'), and this latter projects beyond the edge (7) of the window (4) of solid glass and extends to a point below the covering (6) of the folding top, and the masking strip (13) is connected to the covering (6) of the folding top by means of the projecting region of the weldable film (9').

7. Rear window according to one of claims 1 to 6, **characterised in that** at least one holding part (14) which receives parts (20) of the passenger compartment of the vehicle (1) is provided in the region of the edge (7) of the window.

8. Rear window according to one of claims 1 to 7, **characterised in that** a heating conductor (15) is incorporated in the upper and/or lower zone of overlap (L, L') in the region of the edge (7) of the window.

9. Rear window according to one of claims 1 to 8, **characterised in that** the covering (6) of the folding top, when in multilayered form, has one or more layers of polyester in the zone of overlap (L) with the window (4) of solid glass.

10. Rear window of solid glass for a convertible vehicle, according to one or more of claims 1 to 9, wherein the window (4) of glass is connected to the covering (6) of the folding top by the following steps: the window (4) of solid glass is provided with a layer of primer (10) in a zone of overlap (L) which fits below the covering (6) of the folding top at the edges thereof, a weldable film is introduced between the said layer of primer (10) and the covering (6) of the folding top, which latter has an adhesive layer on its underside, and the window (4) of solid glass is then connected directly into the covering (6) of the folding top in a high-frequency welding operation.

11. Rear window according to claim 10, which is connected to the covering (6) of the folding top by the following steps: at the edges, the covering (6) of the folding top is folded inwards towards the window (4) of solid glass to form a fold (11), this fold (11) is sewn together in the region where it is in two layers, an adhesive layer is applied to the underside, and after the adhesive layer has been applied and has dried, the weldable film (9) is inserted between the window (4) of solid glass and the fold (11) and the high-frequency welding is then performed.

12. Rear window according to claim 11, **characterised in that** an adhesive layer is applied after the sewing of the fold to the weldable film.

## Revendications

1. Lunette arrière en verre d'une voiture cabriolet, dont le bord est reliée à la capote par un élément de liaison en matière plastique, au moyen d'un soudage à haute fréquence, le bord de la lunette et la région de bord de la capote étant soudés l'un à l'autre dans une zone de chevauchement, avec comme élément de liaison, une feuille de soudage formant une couche intermédiaire périphérique,
**caractérisée en ce que**
la capote (6) est pourvue d'un pli (11) du côté de son bord, et le pli (11) de la capote est cousu à la feuille de soudage.

2. Lunette arrière selon la revendication 1,
**caractérisée par**
une couche de fond (10) appliquée entre le bord de lunette (7) et la feuille de soudage (9).

3. Lunette arrière selon la revendication 1 ou 2,
**caractérisée en ce que**
la zone de bord (5) de la capote (6) est enduite d'une couche adhésive supportée par la feuille de soudage (9). -

4. Lunette arrière selon l'une des revendications 1 à 3,
**caractérisée en ce que**
la région de bord (5) de la capote (6) est pourvue d'un pli de bord (11) rabattu en direction du bord de lunette (7) et au moins partiellement supporté par la feuille de soudage (9).

5. Lunette arrière selon l'une des revendications 1 à 4,
**caractérisée en ce que**
sur le côté inférieur de la lunette en verre (4), non tourné vers la zone de chevauchement supérieure (L), un recouvrement en forme de ruban (13) est fixé par l'intermédiaire d'un assemblage par soudure (L'), et à son autre extrémité le recouvrement (13) est relié à la capote (6).

6. Lunette arrière selon la revendication 5,
**caractérisée en ce que**
l'assemblage par soudure (L') prévu dans la région du ruban de recouvrement (13) comporte également une feuille de soudage (9') qui dépasse par-dessus le bord (7) de la lunette en verre (4), et qui s'étend jusqu'en dessous de la capote (6), et le ruban de recouvrement (13) est relié à la capote (6) au moyen de la zone de la feuille de soudage (9') qui dépasse.

7. Lunette arrière selon l'une des revendications 1 à 6,
**caractérisée en ce que**
dans la région du bord de lunette (7), au moins un élément de retenue (14) reçoit des éléments d'intérieur (20) du véhicule (1).

8. Lunette arrière selon l'une des revendications 1 à 7,
**caractérisée en ce que**
dans la région du bord de lunette (7), une conduite de chauffage (15) est intégrée dans la zone de chevauchement supérieure et/ou inférieure (L ; L').

9. Lunette arrière selon l'une des revendications 1 à 8,
**caractérisée en ce que**
la capote (6) formée de plusieurs couches comporte, au moins dans la zone de chevauchement (L) avec la lunette en verre (4), une ou plusieurs couches de polyester.

10. Lunette en verre pour une voiture cabriolet selon une ou plusieurs des revendications 1 à 9, pour laquelle
la lunette en verre (4) est reliée à la capote (6) par les opérations suivantes : la lunette en verre (4) est pourvue d'une couche de fond (10) dans la zone de chevauchement (L) qui, du côté de son bord, s'engage en dessous de la capote (6) ; entre la couche de fond (10) et la capote (6), comportant une couche adhésive sur son côté inférieur, on introduit une feuille de soudage (9) ; ensuite, dans un processus de soudage à haute fréquence, la lunette en verre (4) est directement encastrée dans la capote (6).

11. Lunette arrière selon la revendication 10,
reliée à la capote (6) par les opérations suivantes : la capote (6) est pourvue, du côté de son bord, d'un pli (11)vers l'intérieur en direction de la lunette en verre (4) ; ce pli (11) est cousu dans sa région à deux couches ; sur son côté inférieur on applique une couche adhésive ; après l'application et le séchage de la couche adhésive, la feuille de soudage (9) est insérée entre la lunette en verre (4) et le pli (11) ; ensuite on effectue un soudage à haute fréquence.

12. Lunette arrière selon la revendication 11,
**caractérisée en ce qu'**
une couche adhésive est appliquée une fois que le pli a été cousu avec la feuille de soudage.
